Europäisches Patentamt

European Patent Office

Office européen des brevets

(19)

(11) Numéro de publication : **0 150 752 B1**

# (12) FASCICULE DE BREVET EUROPÉEN

(45) Date de publication du fascicule du brevet :
**15.03.89**

(21) Numéro de dépôt : **85100325.1**

(22) Date de dépôt : **15.01.85**

(51) Int. Cl.⁴ : **G 02 F 1/21**

(54) **Modulateur électro-optique interférentiel à haute sensibilité.**

(30) Priorité : **18.01.84 FR 8400734**

(43) Date de publication de la demande :
**07.08.85 Bulletin 85/32**

(45) Mention de la délivrance du brevet :
**15.03.89 Bulletin 89/11**

(84) Etats contractants désignés :
**AT BE CH DE FR GB IT LI LU NL SE**

(56) Documents cités :
**EP--A-- 0 017 571
FR--A-- 2 457 505
FR--A-- 2 508 754
US--A-- 3 877 781
APPLIED PHYSICS LETTERS, vol. 33, no. 11, décembre 1978, pages 944-947, New York, US; W.K. BURNS et al.: "Interferometric waveguide modulator with polarization-independent operation"**

(73) Titulaire : **COMPAGNIE GENERALE D'ELECTRICITE
Société anonyme dite:
54, rue La Boétie
F-75382 Paris Cédex 08 (FR)**

(72) Inventeur : **Duchet, Christian
76, rue Alfred Dubois
F-91460 Marcoussis (FR)**
Inventeur : **Martin, René
5 Square du Clos de Villaine
F-91300 Massy (FR)**

(74) Mandataire : **Weinmiller, Jürgen et al
Lennéstrasse 9 Postfach 24
D-8133 Feldafing (DE)**

## Description

La présente invention concerne un modulateur électro-optique intégré.

Un modulateur de type Mach-Zehnder réalisé en optique guidée, est décrit dans l'article de R. Keil et F. Auracher (Siemens Forsch-u. Entwickl-Ber. Bd. 9 (1980) Nr 1) « Mach-Zehnder Waveguide Modulators in Ti-Diffused $LiNbO_3$ ». Il comporte :

- une plaquette d'un matériau cristallin transparent dont l'indice optique varie par effet électro-optique sous l'action d'un champ électrique,
- des guides optiques intégrés, ces guides étant formés dans une face de cette plaquette par des augmentations localisées permanentes de l'indice optique résultant d'un dopage du matériau, ces guides étant monomodes tant selon leur largeur que selon leur épaisseur et formant
- un guide d'entrée pour recevoir et conduire une lumière présentant une cohérence spatiale,
- une jonction optique d'entrée en Y pour séparer la lumière du guide d'entrée en deux faisceaux de même intensité,
- deux bras d'interféromètre de longueurs voisines pour conduire les deux faisceaux ainsi séparés, ces deux bras s'étendant parallèlement l'un à l'autre selon une direction longitudinale,
- une jonction optique de sortie en Y pour recombiner les deux faisceaux issus des deux bras,
- et un guide de sortie recevant la lumière ainsi recombinée et la transmettant en sortie du modulateur, la longueur de ce guide étant suffisante pour qu'il ne puisse transmettre que son mode fondamental
- le modulateur comportant en outre des électrodes formées sur ladite face de la plaquette, associées aux deux bras d'interféromètre, et recevant un signal électrique de modulation pour appliquer au matériau de ces deux bras deux champs électriques faisant varier la longueur optique de ces deux bras en sens opposés et pour moduler ainsi l'intensité de la lumière transmise par le guide de sortie, ces électrodes s'étendant selon ladite direction longitudinale sur sensiblement toute la longueur des bras pour augmenter la sensibilité du modulateur.

L'optique guidée (ou optique intégrée) permet de réaliser des modulateurs très rapides (grandes bandes passantes) avec des tensions de commande raisonnable (quelques volts). Mais les modulateurs connus n'ont pas une sensibilité aussi grande qu'on le souhaite parfois, c'est-à-dire que le degré de modulation de lumière obtenu pour une faible tension électrique de commande n'est pas suffisant. On peut remarquer que, dans une certaine mesure, il y a incompatibilité entre la sensibilité et la rapidité : plus un modulateur doit être sensible, plus les électrodes doivent être longues et plus la capacité électrique est grande ce qui entraîne une réduction de la bande passante.

Le matériau le plus approprié pour la réalisation d'un modulateur électro-optique est le niobate de lithium ($LiNbO_3$) car il conduit à la fabrication de bons guides optiques et il est très électro-optique.

On réalise les guides de lumière sur une face d'une plaquette monocristalline, cette face étant perpendiculaire à l'axe cristallin 3 également appelé axe Z, et on utilise une lumière polarisée selon cet axe, c'est-à-dire que le champ électrique optique est parallèle à cet axe. Le champ électrique de modulation appliqué est lui aussi parallèle à cet axe.

Des interféromètres de ce type sont connus par exemple par le document FR-A-2 457 505, et par une communication à la Second European Conference on Integrated Optics (17-18 octobre 1983 Florence, IEE Number 227 « Linear Mach-Zehnder interferometers in $LiNbO_3$ for electromagnetic field sensing » C. H. Bulmer, R. P. Moeller and W. K. Burns, Naval Research Laboratory, Washington, DC 20375, USA).

Dans ces modulateurs connus une des électrodes associées à chacun des bras est une électrode recouvrante qui recouvre ce bras pour que le champ électrique appliqué à ce bras soit sensiblement perpendiculaire à ladite face de la plaquette, les autres électrodes étant des électrodes latérales formées à distance latérale de ces bras.

De plus, pour augmenter la sensibilité il est connu par ces documents d'allonger les électrodes jusque sur les zones de jonctions en Y d'entrée et de sortie.

Il est par ailleurs connu, dans un domaine technique voisin, par un article de Al Ferness et autres « High-Speed, low loss, low-drive-power travelling-wave optical modulator for lambda = 1,32 micron » (Electronic letters, 12 avril 1984, vol. 20 n° 8 page 354) d'abaisser la puissance de commande d'un coupleur optique directionnel vers cinq volts en réduisant la dimension du mode guidé dans un guide optique, c'est-à-dire notamment la largeur de ce guide. Le but est de permettre de diminuer l'écartement entre deux guides parallèles recouverts par deux électrodes de commande, pour obtenir le champ électrique de commande convenable par l'application d'une tension électrique diminuée entre ces électrodes.

Les sensibilités obtenues restent cependant inférieures à ce que l'on souhaite, notamment dans le cas où un modulateur est utilisé pour la réalisation d'un hydrophone en association avec un transducteur piézoélectrique, ou pour celle d'un dispositif de mesure de tensions électriques faibles, par exemple de l'ordre de quelques dizièmes de volt.

La présente invention a pour but la réalisation d'un modulateur électro-optique interférentiel, présentant une sensibilité accrue tout en conservant une bande passante importante et un prix de revient modéré.

Le modulateur selon l'invention comporte un interféromètre Mach-Zehnder intégré avec des électrodes recouvrantes comme connu par le document cité en premier lieu. Il est caractérisé par le fait qu'il comporte six dites électrodes, chaque bras étant associé à trois électrodes qui sont une électrode recouvrante disposée entre deux électrodes latérales, le signal de modulation étant appliqué entre d'une part cette électrode recouvrante et d'autre part ces deux électrodes latérales, de manière que le champ électrique appliqué à ce bras soit rendu sensiblement uniforme sur toute la largeur de celui-ci.

Ceci permet d'augmenter encore la sensibilité du modulateur, mais nécessite la présence de deux électrodes latérales « internes » c'est-à-dire disposées entre les deux bras. Ceci fait évidemment apparaître entre ces bras une capacité parasite supplémentaire qui diminue la bande passante, et cette capacité est d'autant plus grande que ces électrodes sont proches. Or l'espacement latéral de ces bras ne doit pas être choisi beaucoup plus grand que la valeur nécessaire pour éviter un couplage optique parasite entre les deux bras. Un espacement inutilement grand aurait en effet deux inconvénients : Il ferait apparaître entre les bras des différences de température capables de créer une modulation parasite. Et il augmenterait les dimensions et le prix de la plaquette cristalline. Il est cependant apparu possible aux inventeurs de limiter ces inconvénients à un niveau parfaitement acceptable d'une part par un choix convenable des espacements, d'autre part en disposant la plaquette dans un boîtier de protection mécanique et thermique de type connu. Quant au nombre accru des électrodes il n'entraîne pas de supplément appréciable de coût de fabrication lorsqu'on utilise un processus classique de photolithogravure.

On utilise de préférence les dispositions suivantes :

- Chacune desdites électrodes recouvrantes déborde latéralement des deux côtés du bras associé de manière à rendre le champ électrique encore plus uniforme sur la largeur de ce bras.

- Dans le cas d'un hydrophone les longueurs optiques des deux bras d'interféromètre en l'absence de champ électrique diffèrent d'environ un quart de la longueur d'onde de la lumière de ladite source, lesdites électrodes étant disposées pour appliquer aux deux bras d'interféromètre des champs électriques de sens opposés de manière à provoquer des variations d'indice optique de sens opposés dans le matériau cristallin qui les constitue.

- La longueur d'action de ces électrodes sur chacun de ces deux bras est supérieure à un centimètre de manière à obtenir une grande sensibilité.

- La distance entre ces deux bras est supérieure à environ cinq fois la largeur des bras pour éviter un couplage optique parasite entre les deux bras, et elle est en même temps inférieure à 50 micromètres de manière à éviter des écarts de température entre les deux bras.

- L'intervalle entre les deux électrodes latérales internes disposées, entre les deux bras et associées respectivement à ces deux bras est plus grand que l'intervalle entre chacune de ces électrodes et le bras associé, de manière à diminuer la capacitance du modulateur et à augmenter sa bande passante de fréquences.

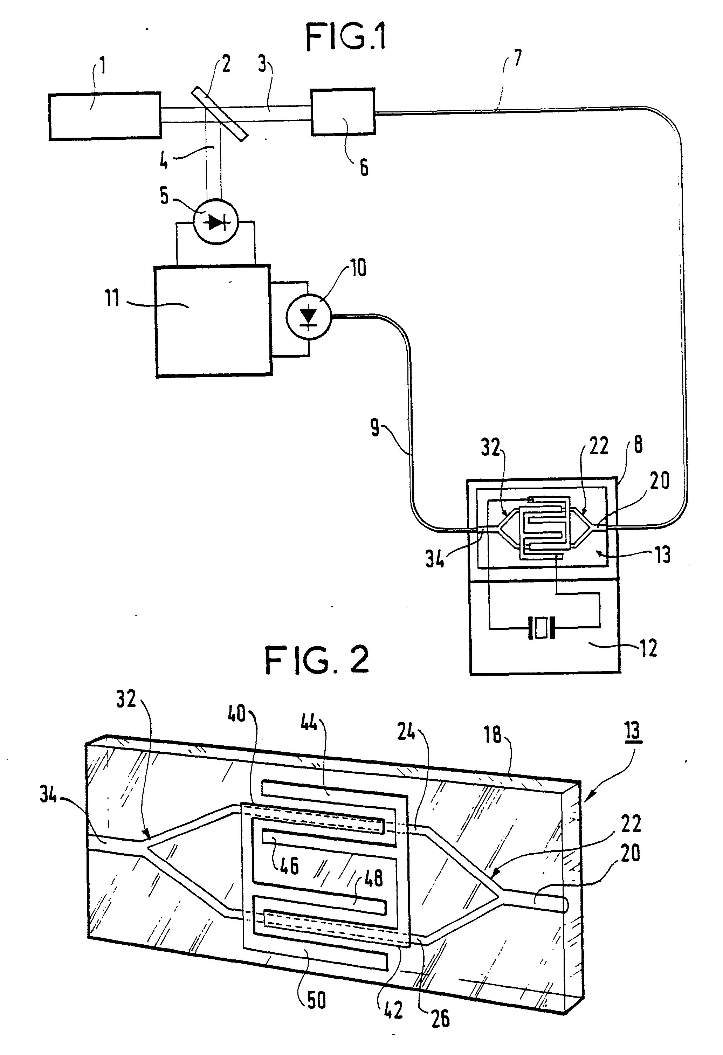

On peut remarquer que l'article paru dans Applied Physics Letters, vol. 33, n° 11, décembre 1978, pages 944-947, de W. K. Burns et al. : « Interférometric waveguide modulator with polarization-independent operation » montre, dans la partie droite de sa figure 1, un dispositif interférométrique à champ vertical, et on peut à première vue se demander si le champ « vertical » appliqué à un bras n'est pas rendu sensiblement uniforme sur toute la largeur du bras, par le fait que l'électrode recouvrante est entourée par deux électrodes latérales, même si seule l'une de ces électrodes latérales est propre à ce bras. En effet, la distance entre l'électrode recouvrante et l'électrode latérale propre à ce bras apparaît comparable à celle entre les électrodes recouvrant les deux bras, ce qui, pour un bras, fait apparaître l'électrode recouvrant l'autre bras comme symétrique de l'électrode latérale. En fait cette apparence ne correspond pas à la réalité car une distance de quelques dizaines de micromètres est nécessaire entre les deux bras larges de quelques micromètres, le rapport entre cette distance et cette largeur devant être d'environ 5 à 10, pour éviter un couplage optique parasite entre les deux bras. Une telle distance empêche l'électrode qui recouvre un bras de jouer le rôle d'électrode latérale pour rendre le champ électrique symétrique.

A l'aide des figures schématiques ci-jointes, on va décrire ci-après, à titre non limitatif, comment l'invention peut être mise en oeuvre.

La figure 1 représente une vue d'ensemble d'un hydrophone comportant un modulateur selon l'invention.

La figure 2 représente une vue en perspective du modulateur de cet hydrophone.

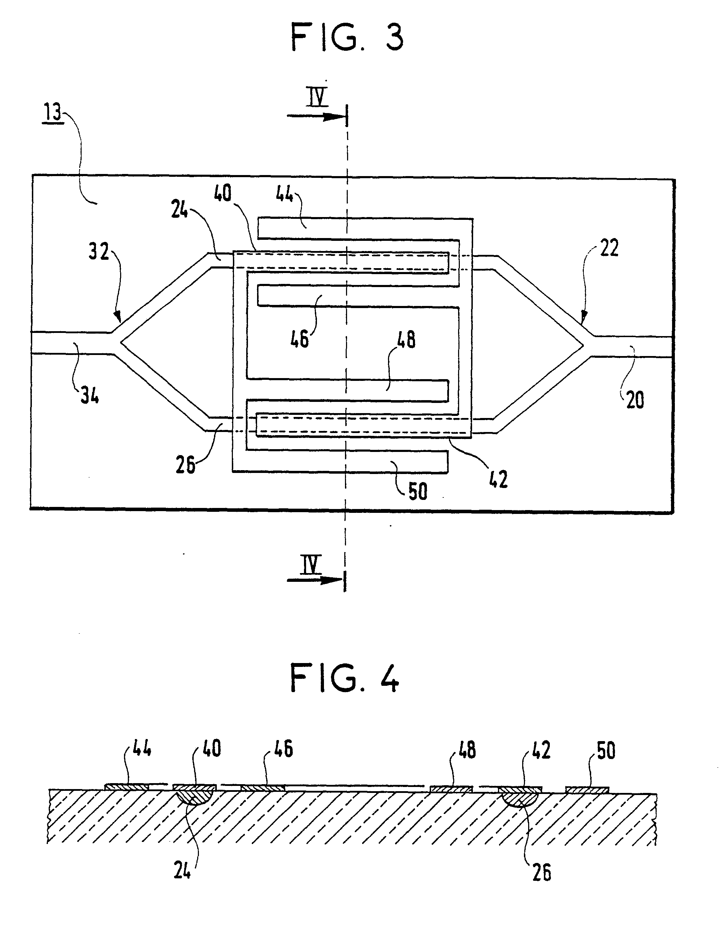

Les figures 3 et 4 représentent respectivement une vue de dessus et une vue en coupe transversale de ce modulateur.

L'hydrophone comporte :
- une source 1 cohérente spatialement
- une lame séparatrice 2 divisant le faisceau initial en deux faisceaux 3 et 4. Le faisceau 4 arrive sur un photodétecteur de référence 5 et a une intensité beaucoup plus faible (100 fois plus faible) que celle du faisceau 3. Il sert uniquement de référence pour éliminer les perturbations dues aux fluctuations d'intensité de la source.
- un système d'injection 6 de la lumière.
- une fibre unimodale 7 d'aller.
- un capteur acoustique 8 immergé passif recevant la lumière et la modulant selon les ondes acoustiques qu'il reçoit.
- une fibre unimodale ou multimodale de retour 9.
- un photodétecteur de réception 10.
- un circuit électronique 11 qui élimine les fluctuations d'intensité de la source 1 et fournit un signal représentatif des ondes acoustiques reçues par le capteur, ce circuit recevant pour cela les signaux de sortie des photodétecteurs 5 et 10.

Le capteur acoustique immergé passif 8 est composé par :

- un transducteur piézoélectrique 12 recevant les ondes acoustiques et fournissant un signal électrique de modulation,

- et un modulateur électro-optique 13 recevant ce signal électrique de modulation et modulant la lumière amenée par la fibre d'aller. Ce modulateur est réalisé selon la présente invention.

Il comporte une plaquette 18 constituée d'un matériau transparent dont l'indice optique varie par effet électro-optique sous l'action d'un champ électrique créé par le signal électrique de modulation, et des guides optiques monomodes tant selon leurs largeurs que selon leurs épaisseurs, à savoir :

- Un guide d'entrée 20 recevant la lumière amenée par la fibre d'aller,

- Une jonction optique d'entrée en Y 22 pour séparer la lumière provenant du guide d'entrée en deux faisceaux de même intensité,

- Deux bras d'interféromètre (24, 26) pour conduire les deux faisceaux ainsi séparés qui subissent une variation de longueur optique sous l'action du signal électrique de modulation. Ces deux bras présentent une différence de longueur optique d'environ un quart de longueur d'onde pour maximiser la sensibilité de l'interféromètre et donner une variation linéaire d'intensité en fonction du faible signal électrique de modulation. Des électrodes sont déposées sur la face utile de la plaquette sur les deux bras pour leur appliquer un champ électrique qui est créé par le signal électrique de transduction et qui induit une variation d'indice optique. Les lignes de champ électrique se referment par l'intérieur de la plaquette et les sens du champ sont opposés dans les deux bras, ce qui induit de variations d'indice de sens opposés.

- Une jonction optique de sortie en Y (32) pour recombiner les deux faisceaux issus des deux bras.

- Un guide de sortie 34 recevant la lumière ainsi recombinée et la transmettant à la fibre optique de retour. Ce guide de sortie représente une longueur suffisante pour ne transmettre que le mode fondamental. Suivant la différence de phase entre les faisceaux venant des deux bras et induite par le signal électrique issu du transducteur, la recombinaison fournit un mode fondamental d'intensité variable.

Plus particulièrement la source 1 est un laser He-Ne émettant à 0,633 micromètre de longueur d'onde ;

Quant à la plaquette monocristalline elle est constituée de niobate de lithium et coupée comme précédemment indiqué. D'autres matériaux pourraient cependant être utilisés, par exemple le tantalate de lithium.

Selon la présente invention, les électrodes sont deux électrodes recouvrantes 40 et 42 sur les guides 24 et 26 et quatre électrodes latérales, à savoir 44 et 46 de part et d'autre de l'électrode 40, 48 et 50 de part et d'autre de l'électrode 42, le signal de modulation étant appliqué entre d'une part les électrodes interconnectées 40, 48, 50 et d'autre part les électrodes interconnectées 42, 44, 46.

Les dimensions longitudinales sont les suivantes, en millimètres :

Electrodes : 22,8
Bras d'interféromètre : 23,2
Branches des jonctions en Y : 2,005
Plaquette : 33,21

Les branches des jonctions en Y font un angle à 1° degré.

Les dimensions transversales sont les suivantes, en micromètres :

Electrodes : 5
Intervalle entre électrodes associées à un même bras : 3
Intervalle entre électrodes internes : 17, l'entraxe entre guide étant alors de 38.

La largeur de la plaquette est par exemple de 2 mm et son épaisseur de 0,5 mm.

Les guides optiques sont réalisés de façon classique par diffusion de titane à partir de bandes préalablement déposées avec :

- épaisseur de titane : 38 nm
- largeur des bandes de titane : 3 micromètres
- temps de diffusion : 5 heures
- température de diffusion : 980 °C

Avec ces conditions les guides sont monomodes à la longueur d'onde de 632,8 nm.

Les électrodes sont réalisées par des procédés classiques de photolithographie et sont constituées d'or sur une sous-couche de titane.

L'onde optique étant absorbée par le métal, une couche dite « d'isolement optique » est interposée entre le $LiNbO_3$ et les électrodes. Cette couche en $SiO_2$ à une épaisseur d'environ 100 nm. Cette couche non représentée peut s'étendre sur toute la face utile du cristal de niobate.

La sensibilité est mesurée par la tension électrique VM qu'il est nécessaire d'appliquer pour passer de la transmission maximum à la transmission minimum. Les tensions VM classiquement utilisées sont de quelques volts. Avec la structure décrite ici, la tension VM est de 0,4 V pour la longueur d'onde utilisée.

La bande passante reste largement suffisante dans de nombreuses applications telles que celle décrite ci-dessus ou la mesure de faibles tensions. Plus précisément elle est de 100 MHz environ.

Quoiqu'on ait décrit ci-dessus un hydrophone permettant de détecter des ondes acoustiques se propageant dans l'eau, il doit être compris que l'invention s'applique de la même manière à des appareils de mesure de pressions et de vibrations diverses. Elle peut s'appliquer de plus à tout appareil de mesure ou de détection dans lequel le phénomène mesuré ou détecté se traduit par un signal électrique de très faible puissance et de tension inférieure à 1 volt environ.

## Revendications

1. Modulateur électro-optique interférentiel à haute sensibilité comportant,
- un interféromètre (13) du type Mach-Zehnder intégré, cet interféromètre comportant lui même
- une plaquette (18) d'un matériau cristallin transparent dont l'indice optique varie par effet électro-optique sous l'action d'un champ électrique,
- des guides optiques intégrés, ces guides étant formés dans une face de cette plaquette par des augmentations localisées permanentes de l'indice optique résultant d'un dopage du matériau, ces guides étant monomodes tant selon leur largeur que selon leur épaisseur et formant
- un guide d'entrée (20) pour recevoir et conduire une lumière présentant une cohérence spatiale,
- une jonction optique d'entrée en Y pour séparer la lumière du guide d'entrée en deux faisceaux de même intensité,
- deux bras d'interféromètre (24, 26) de longueurs voisines pour conduire les deux faisceaux ainsi séparés, ces deux bras s'étendant parallèlement l'un à l'autre selon une direction longitudinale,
- une jonction optique de sortie en Y (32) pour recombiner les deux faisceaux issus des deux bras,
- et un guide de sortie (34) recevant la lumière ainsi recombinée et la transmettant en sortie (9) du modulateur, la longueur de ce guide étant suffisante pour qu'il ne puisse transmettre que son mode fondamental
- le modulateur comportant en outre des électrodes formées sur ladite face de la plaquette associées aux deux bras d'interféromètre et recevant un signal électrique de modulation pour appliquer au matériau de ces deux bras (24, 26) deux champs électriques faisant varier la longueur optique de ces deux bras en sens opposés et pour moduler ainsi l'intensité de la lumière transmise par le guide de sortie (34), ces électrodes s'étendant selon ladite direction longitudinale sur sensiblement toute la longueur des bras pour augmenter la sensibilité du modulateur, une des électrodes associées à chacun de ces bras étant une électrode recouvrante qui recouvre ce bras pour que le champ électrique appliqué à ce bras soit sensiblement perpendiculaire à ladite face de la plaquette, les autres électrodes étant des électrodes latérales formées à distance latérale de ces bras,
- ce modulateur étant caractérisé par le fait qu'il comporte six dites électrodes, chaque bras étant associé à trois électrodes qui sont une électrode recouvrante disposée entre deux électrodes latérales, le signal de modulation étant appliqué entre d'une part cette électrode recouvrante et d'autre part ces deux électrodes latérales, de manière que le champ électrique appliqué à ce bras soit rendu sensiblement uniforme sur toute la largeur de celui-ci pour augmenter encore la sensibilité du modulateur.

2. Modulateur selon la revendication 1, caractérisé par le fait que chacune desdites électrodes recouvrantes déborde latéralement des deux côtés du bras associé de manière à rendre le champ électrique plus uniforme sur la largeur de ce bras.

3. Modulateur selon la revendication 1, caractérisé par le fait que les longueurs optiques des deux bras d'interféromètre (24, 26) en l'absence de champ électrique diffèrent d'environ un quart de la longueur d'onde de la lumière de ladite source (1),
- la longueur d'action de ces électrodes sur chacun de ces deux bras étant supérieure à un centimètre de manière à obtenir une grande sensibilité,
- la distance entre ces deux bras étant inférieure à 50 micromètres de manière à éviter des écarts de température entre les deux bras.

4. Modulateur selon la revendication 3, caractérisé par le fait que l'intervalle entre les deux électrodes latérales internes disposées entre les deux bras et associées respectivement à ces deux bras est plus grand que l'intervalle entre chacune de ces électrodes et le bras associé, de manière à diminuer la capacitance du modulateur et à augmenter sa bande passante de fréquences.

5. Modulateur selon la revendication 1, caractérisé par le fait que lesdites électrodes sont disposées pour appliquer aux deux bras d'interféromètre (24, 26) des champs électriques de sens opposés de manière à provoquer des variations d'indice optique de sens opposés dans le matériau cristallin qui les constitue.

## Claims

1. A high sensitivity, interferential electro-optical modulator comprising
- a Mach-Zehnder type integrated interferometer (13), this interferometer itself comprising :
- a plate (18) made of transparent crystalline material whose optical index varies by electro-optical effect under the action of an electric field,
- integrated optical guides, these guides being formed in one face of this plate by permanent localized increases of the optical index resulting from a doping of the material, these guides being of the monomode type both as to their width as to their thickness, and constituting
- an input guide (20) receiving and conveying a light having a space coherence,
- an optical input Y-type junction conceived to separate the light of the input guide into two beams of equal intensity,
- two interferometric arms (24, 26) of similar length to convey the two beams thus separated, these two arms extending parallel to each other in a longitudinal direction,
- an optical output Y-type junction (32) conceived to recombine these two beams issuing from the two arms,
- and an output guide (34) receiving the light thus recombined and transmitting it to the output (9) of the modulator, the length of this guide being sufficient for allowing only its fundamental mode to be transmitted,

- the modulator also comprising electrodes formed on the said face of the plate, associated to the two interferometric arms and receiving an electric modulation signal for applying to the material of these two arms (24, 26) two electric fields, which vary the optical length of the two arms in opposite directions, and for thus modulating the intensity of the light transmitted by the output guide (34), said electrodes extending along said longitudinal direction over practically the whole length of the arms in order to increase the sensitivity of the modulator, one of the electrodes associated to each one of these arms being an overlapping electrode which overlaps this arm so that the electric field applied to this arm is substantially perpendicular to this face of the plate, the other electrodes being lateral electrodes which are located at a lateral distance from these arms, characterized in that it comprises six of said electrodes, each arm being associated with three electrodes constituted by an overlapping electrode disposed between two lateral electrodes, the modulation signal being applied between the overlapping electrode on the one hand and the two lateral electrodes on the other hand, so that the electric field applied to this arm is made uniform substantially over the whole of its width for further increasing the sensitivity of the modulator.

2. A modulator according to claim 1, characterized in that each of said overlapping electrodes extends laterally beyond the two sides of the associated arm so as to render the electric field more uniform over the whole width of this arm.

3. A modulator according to claim 1, characterized in that the optical lengths of the two interferometer arms (24, 26), in the absence of an electric field, differ by about one quarter of the wavelength of the light from said source (1),

- the length of action of these electrodes on each of these two arms exceeding one centimeter so as to obtain great sensitivity

- the distance between these two arms being less than fifty micrometers so as to avoid differences in temperature between the two arms.

4. A modulator according to claim 3, characterized in that the interval between the two internal lateral electrodes, disposed between the two arms and associated respectively to these two arms, is greater than the interval between each of these electrodes and the associated arm, so as to reduce the capacitance of the modulator and to increase its frequency passband.

5. A modulator according to claim 1, characterized in that said electrodes are disposed to apply to the two interferometer arms (24, 26) electric fields of opposite directions so as to cause variations in the optical index of opposite directions in the crystalline material, of which the arms consists.

**Patentansprüche**

1. Elektro-optischer Interferenzmodulator hoher Empfindlichkeit mit

- einem integrierten Interferometer (13) vom Typ Mach-Zehnder, das selber aufweist

- ein Plättchen (18) aus durchscheinendem, kristallinem Material, dessen optischer Index sich unter der Wirkung eines elektrischen Feldes aufgrund eines elektro-optischen Effekts verändert,

- integrierte Lichtwellenleiter, die in einer Fläche des Plättchens durch dauerhafte örtliche Vergrößerung des optischen Index aufgrund einer Dotierung des Materials erzeugt werden, wobei es sich um Monomodeleiter handelt, sowohl was ihre Breite, als auch was ihre Dicke betrifft, und zwar

- einen Eingangsleiter (20) zum Empfang und zur Weiterleitung einer räumlich kohärenten Lichtstrahlung,

- einen optischen Eingangsverbinder in Y-Form zur Aufteilung des Lichts im Eingangsleiter in zwei Strahlen gleicher Stärke,

- zwei interferometrische Arme (24, 26) von nur wenig unterschiedlicher Länge zur Weiterleitung der beiden so aufgeteilten Strahlen, wobei sich die beiden Arme parallel zueinander in einer Längsrichtung erstrecken,

- einen optischen Ausgangsverbinder (32) in Y-Form zur Wiedervereinigung der beiden aus den Armen austretenden Lichtstrahlen,

- und einen Ausgangsleiter (34) zur Aufnahme des so wiedervereinigten Lichtes und zur Weiterleitung zum Ausgang (9) des Modulators, wobei die Länge dieses Leiters ausreicht, daß er nur seinen Grundmode übertragen kann,

- wobei der Modulator weiter Elektroden aufweist, die auf der Fläche des Plättchens ausgebildet, den beiden Armen des Interferometers zugeordnet sind und ein elektrisches Modulationssignal empfangen, um an das Material der beiden Arme (24, 26) zwei elektrische Felder anzulegen, welche die optische Länge der beiden Arme im entgegengesetzten Sinn verändern und um auf diese Weise die Stärke des durch den Ausgangsleiter (34) übertragenen Lichts zu modulieren, wobei sich die Elektroden in der Längsrichtung im wesentlichen über die gesamte Länge der Arme erstrecken, um die Empfindlichkeit des Modulators zu erhöhen, wobei eine der jedem dieser Arme zugeordneten Elektroden eine Abdeckelektrode ist, die den Arm überdeckt, damit das an den Arm angelegte elektrische Feld im wesentlichen senkrecht zur Fläche des Plättchens steht, während die anderen Elektroden Seitenelektroden sind, welche mit seitlichem Abstand zu den Armen angeordnet sind, dadurch gekennzeichnet, daß er sechs Elektroden aufweist, wobei jedem Arm drei Elektroden zugeordnet sind, die aus zwei Seitenelektroden und einer dazwischen angeordneten Abdeckungselektrode bestehen, wobei das Modulationssignal zwischen einerseits die Abdekkungselektrode und andererseits die Seitenelektroden angelegt ist, derart, daß sich das an den betreffenden Arm angelegte elektrische Feld im wesentlichen gleichmäßig über die gesamte Länge des Armes ausbildet, um die Empfindlichkeit des Modulators weiter zu erhöhen.

2. Modulator nach Anspruch 1, dadurch gekennzeichnet, daß jede der Abdeckungselektroden zu beiden Seiten über die zugehörigen Arme übersteht, so daß das elektrische Feld gleichmäßiger über die Breite des Armes wird.

3. Modulator nach Anspruch 1, dadurch gekennzeichnet, daß sich die optischen Längen der beiden Interferometerarme (24, 26), bei Abwesenheit des elektrischen Feldes um ungefähr ein Viertel der Wellenlänge des Lichtes der Quelle (1) unterscheiden,

- die Wirkungslänge dieser Elektroden auf jedem ihrer Arme größer als 1 cm ist, so daß eine große Empfindlichkeit erzielt wird,

- der Abstand zwischen diesen beiden Armen kleiner als 50 Mikrometer ist, so daß Temperaturunterschiede zwischen den Armen vermieden werden.

4. Modulator nach Anspruch 3, dadurch gekennzeichnet, daß der Abstand zwischen zwei seitlichen, inneren Elektroden, die zwischen den beiden Armen angeordnet und jeweils einem der beiden Arme zugeordnet sind, größer ist als der Abstand zwischen diesen Elektroden und dem zugehörigen Arm, so daß die Kapazität des Modulators verringert und sein Frequenzband vergrößert wird.

5. Modulator nach Anspruch 1, dadurch gekennzeichnet, daß die Elektroden so angeordnet sind, daß die beiden Interferometerarme (24, 26) elektrischen Feldern mit einander entgegengesetztem Richtungssinn ausgesetzt sind, derart, daß Änderungen des optischen Index in entgegengesetzten Richtungen im kristallinen Material hervorgerufen werden, aus dem die Arme bestehen.

EP 0 150 752 B1

# FIG.1

# FIG. 2

1

# FIG. 3

# FIG. 4